# EUROPÄISCHE PATENTSCHRIFT

(11) **EP 1 187 778 B1**
(45) Veröffentlichungstag und Bekanntmachung des Hinweises auf die Patenterteilung: **05.03.2003**
(21) Anmeldenummer: 00918821.0
(22) Anmeldetag: 21.03.2000
(51) Int. Cl.: B65G 13/07

(54) **ANTRIEBSSYSTEM FÜR FÖRDERROLLEN**
DRIVE SYSTEM FOR CONVEYOR ROLLERS
SYSTEME D'ENTRAINEMENT POUR ROULEAUX TRANSPORTEURS

(30) Priorität: 30.03.1999 DE 19914515
(43) Veröffentlichungstag der Anmeldung: 20.03.2002
(73) Patentinhaber: Interroll Holding AG, CH-6592 San Antonino (CH)
(72) Erfinder: SPECHT, Dieter, CH-6618 Arcegno (CH)
(74) Vertreter: Müller-Boré & Partner Patentanwälte
(86) Internationale Anmeldenummer: EP0002496
(87) Internationale Veröffentlichungsnummer: WO00059810

(56) Entgegenhaltungen:
- EP-A- 0 327 652
- DE-A- 3 136 597
- DE-A- 4 007 707
- US-A- 5 878 869

## Beschreibung

Die Erfindung betrifft ein Antriebssystem für Förderrollen in einer Rollenbahn.

Rollenbahnen, die zum Fördern verschiedenster Gegenstände eingesetzt werden, bestehen üblicherweise aus zwei zueinander parallelen sich in Längsrichtung der Rollenbahn erstreckenden Tragprofilen, zwischen denen hintereinanderliegend eine Vielzahl von Förderrollen angeordnet ist. Diese Förderrollen können freidrehend gelagert sein, d.h. nicht angetrieben sein, so daß die zu fördernden Gegenstände sich auf der Rollenbahn nur aufgrund einer zuvor erfahrenen Beschleunigung oder bei einem Gefälle der Rollenbahn aufgrund ihrer Gewichtskraft bewegen. In derartigen Rollenbahnen werden jedoch auch angetriebene Förderrollen eingesetzt, welche von außen in Drehung versetzt werden, um einen Gegenstand auf der Rollenbahn zu bewegen. Dabei können sämtliche Förderrollen einer Rollenbahn oder auch nur bestimmte Förderrollen in regelmäßigen Abständen angetrieben sein, wobei zwischen diesen angetriebenen Förderrollen frei drehbare Förderrollen angeordnet sind.

US-A-5 878 869 bezieht sich beispielsweise auf eine Rollenfördervorrichtung mit einer Strom liefernden Stange, einem darin angebrachten Antriebsmotor und zwei Spur- und Rolleneinheiten, welche auf der Strom liefernden Stange bilateral angeordnet sind. Die Spur- und Rolleneinheiten beinhalten eine Spur, auf der Spur montierte beabstandete Rollenanordnungen und eine Kette, welche durch den Antriebsmotor angetrieben wird, um die Rollenanordnungen zum Fördern von Gütern zu drehen.

DE-A-31 36 597 betrifft Rollenbahnen mit angetriebenen oder nicht angetriebenen Förderrollen, bei denen die beidseitigen Führungswangen aus einem LeichtmetallStrangpreßprofil hergestellt sind. Die Besonderheiten dieses Profils sind dabei die in Wangenlängsrichtung verlaufenden Leisten oder Sockel zur Fixierung der entsprechend abgeflachten Rollenachsen sowie ebenfalls die durchlaufenden Nuten zur Befestigung von Schaltelementen bzw. weitere Nuten für die Anbringung von Stützelementen an den Außenseiten des Profils.

EP-A-0 327 652 bezieht sich auf ein Verfahren zur Herstellung einer Förderrollenbahn mit im wesentlichen sich in Förderrichtung erstreckenden Tragprofilen und mit an den Tragprofilen angeordneten Förderrollen sowie eine Förderrollenbahn mit zueinander parallelen im Abstand voneinander angeordneten im wesentlichen in Förderrichtung sich erstreckenden Tragprofilen mit an oder zwischen diesen angeordneten Förderrollen.

Die Förderrollen weisen üblicherweise an ihren beiden Längsenden bzw. Stirnseiten eine Aufnahme für eine Achse oder Welle auf, mittels derer sie in den Tragprofilen der Rollenbahn gelagert sind. Bei den angetriebenen Förderrollen ist an zumindest einer Stirnseite der angetriebenen Förderrolle eine Antriebswelle angebracht, welche zum einen im Tragprofil gelagert ist und zum anderen üblicherweise zwischen der Förderrolle und dem Tragprofil ein Antriebsrad aufweist, über das die Förderrolle angetrieben wird. Bei diesen Antriebsrädern handelt es sich üblicherweise um Ketten- oder Zahnräder, welche über eine Kette oder einen Zahnriemen angetrieben werden. Dabei erstreckt sich meist eine durchgehende Antriebskette bzw. ein durchgehender Zahnriemen über eine Vielzahl von Antriebsrädern einer Vielzahl zugehöriger zu einer Fördergruppe zusammengefaßter Förderrollen, so daß diese gemeinsam angetrieben werden.

Diese Anordnung weist jedoch den Nachteil auf, daß die Antriebsräder und der Zahnriemen bzw. die Antriebskette sehr nah an der eigentlichen Förderrolle liegen, so daß die Gefahr eines Kontaktes mit zu fördernden Gegenständen besteht. Ein weiterer Nachteil ist, daß das Antriebssystem, welches zwischen den Förderrollen und dem Tragprofil angeordnet ist, schnell verschmutzt, wodurch seine Funktionsweise beeinträchtigt und der Verschleiß erhöht wird. Ferner bietet dieses Antriebssystem eine schlechte Zugänglichkeit, insbesondere bei der Montage oder beim Auswechseln eines endlosen Antriebsriemens bzw. einer Antriebskette, da hierzu die gesamten Rollen ausgebaut werden müssen.

Es ist Aufgabe der Erfindung ein verbessertes Antriebssystem für Förderrollen in einer Rollenbahn zu schaffen, bei welchem das Antriebssystem besser vor Verschmutzung und einem möglichen Kontakt mit zu fördernden Gegenständen geschützt ist sowie eine verbesserte Zugänglichkeit bietet.

Die Aufgabe wird durch ein Antriebssystem mit den im Anspruch 1 angegebenen Merkmalen gelöst. Vorteilhafte Ausführungsformen ergeben sich aus den Unteransprüchen.

Bei dem erfindungsgemäßen Antriebssystem sind die Antriebseinrichtungen, welche zumindest einige der Förderrollen drehend antreiben, vollständig im Inneren zumindest eines die Förderrollen tragenden Tragprofiles angeordnet. Auf diese Weise wird ein vollständig geschlossenes Antriebssystem gebildet, welches einen verbesserten Schutz vor Verschmutzung des Antriebssystems bildet. Weiterhin wird durch diese geschlossene Ausgestaltung die Gefahr verringert, daß zu fördernde Gegenstände oder sich in der Nähe der Rollenbahn aufhaltende Personen in Kontakt mit dem Antriebssystem kommen, wodurch die Gefahr einer Beschädigung des Antriebssystemes bzw. der zu transportierenden Gegenstände oder von Verletzungen verringert wird.

Weiterhin umfassen die Antriebseinrichtungen zumindest ein Antriebsrad für jede angetriebene Förderrolle, welches über eine Welle drehfest mit der Förderrolle verbunden ist. Ein solches Antriebssystem ermöglicht eine einfache und kostengünstige Ausgestaltung des Antriebes, da die Förderrollen mittels der Antriebsräder beispielsweise über durchlaufende Riemen oder Ketten angetrieben werden können.

Weiterhin sind die Wellen an beiden Seiten der zugehörigen Antriebsräder in zumindest einer in dem Tragprofil angeordneten Trageinrichtung gelagert. Auf diese Weise wird eine zuverlässige Lagerung der Antriebsräder und der Wellen, welche das Antriebsmoment von den Antriebsrädern auf die Förderrollen übertragen, gewährleistet. Durch die direkte Lagerung in Nähe der Antriebsräder, werden die in die Welle eingeleiteten Querkräfte und damit verbundenen Biegemomente verringert, wodurch insgesamt ein besserer und ruhigerer Lauf der Förderrollen erreicht wird.

Weiterhin ist die Trageinrichtung im wesentlichen U-förmig ausgebildet, wobei sich die beiden freien Schenkel der Trageinrichtung parallel entlang der Stirnseiten des zugehörigen Antriebsrades erstrecken und die Lager für die Welle aufweisen. Auf diese Weise kann die Trageinrichtung sehr kompakt ausgebildet werden, so daß sie leicht im Inneren eines Tragprofiles angeordnet werden kann. Weiterhin können die Lager sehr dicht an dem Antriebsrad angeordnet werden, wodurch eine günstige Kraftübertragung auf die Lager bei geringen auf die Welle wirkenden Biegemomenten erreicht wird. Die Lager sind dabei vorteilhafterweise, insbesondere wenn die Förderrollen nur zum Transport leichter Lasten vorgesehen sind, als einfache Gleitlager ausgebildet, in denen die Welle zum Antrieb der Förderrollen getragen wird.

Vorteilhafteweise umfassen die Antriebseinrichtungen zumindest eine Gruppe von Antriebsrädern, die über ein gemeinsames Antriebsmittel angetrieben wird. Ein solches Antriebssystem ermöglicht eine einfache und kostengünstige Ausgestaltung des Antriebes, da die Förderrollen mittels der Antriebsräder beispielsweise über durchlaufende Riemen oder Ketten angetrieben werden können.

Weiter bevorzugt sind die Antriebsräder als Zahnräder ausgebildet, welche über ein gemeinsames Antriebsmittel in Form eines Zahnriemens oder einer Kette angetrieben werden. Ein solcher Zahnriemenantrieb oder Kettenantrieb ermöglicht eine sichere Kraftübertragung auf die einzelnen Förderrollen. Zusätzlich ist insbesondere der Zahnriemenantrieb kostengünstig herzustellen.

Für eine bestimmte Anzahl von angetriebenen Förderrollen oder für jede einzelne angetriebene Förderrolle ist vorzugsweise jeweils eine einzelne Trageinrichtung vorgesehen. Dies ermöglicht eine sehr flexible Anpassung des Antriebssystems an verschiedene Anzahlen und Anordnungen von angetriebenen Förderrollen, da die Trageinrichtungen an den Stellen in dem Tragprofil angebracht werden können, an denen für den gewünschten Einsatzfall angetriebene Förderrollen vorgesehen sind.

Vorteilhafterweise ist die Trageinrichtung im Inneren des Tragprofiles vorzugsweise durch Einrasten befestigt. Dazu können im Inneren des Tragprofiles, welches bevorzugt als Aluminiumstrangpreßprofil ausgebildet ist, entsprechende Nuten vorgesehen sein, in die die Trageinrichtung mittels entsprechender Vorsprünge eingerastet werden kann. Dies ermöglicht eine sehr schnelle und kostengünstige Montage, da keinerlei Verschraubungen oder andere zeitintensive Befestigungsvorgänge mit zusätzlichen Befestigungselementen erforderlich sind.

Die Trageinrichtung ist vorteilhafterweise derart teilbar, daß zumindest einer der freien Schenkel abnehmbar ist. Diese Ausgestaltung ermöglicht eine äußerst leichte Montage des Antriebsmittels, insbesondere wenn es sich um ein endloses Antriebsmittel, wie beispielsweise einen Zahnriemen handelt. Dann kann zu dessen Montage einer der freien Schenkel der Trageinrichtung abgenommen werden, wobei dann das Antriebsrad sowie die Welle weiterhin durch den zweiten Schenkel der Trageinrichtung gehalten werden. Das Antriebsmittel, wie beispielsweise der Zahnriemen kann dann leicht auf das nun zugängliche Antriebsrad aufgeschoben werden und anschließend kann der abgenommene Schenkel wieder an der Trageinrichtung angebracht werden, so daß die Lagerung auf beiden Seiten des Antriebsrades wieder hergestellt ist.

Bevorzugt ist der abnehmbare Schenkel der Trageinrichtung mit dem übrigen Teil der Trageinrichtung und vorzugsweise auch mit dem Tragprofil durch Einrasten verbindbar. Auf diese Weise wird die Montage weiter vereinfacht, da keinerlei aufwendige Montagevorgänge, wie beispielsweise Verschrauben erforderlich sind. Die Teile der Trageinrichtung werden einfach miteinander verrastet bzw. verklipst und ebenfalls durch Einrasten in dem Tragprofil befestigt. Dabei weist das Tragprofil, welches vorzugsweise ein Aluminiumstrangpreßprofil ist, korrespondierende Rastmittel, wie beispielsweise entsprechende Rastnuten auf.

Günstigerweise bildet die Trageinrichtung zusätzlich eine Führung für das Antriebsmittel. Die U-förmige Trageinrichtung ist dazu so dimensioniert, daß sie mit ihren freien Schenkeln direkt an den Stirnseiten des Antriebsrades anliegt, so daß die freien Schenkel gleichzeitig eine seitliche Führung für ein durchlaufende Antriebsmittel, wie beispielsweise einen Zahnriemen bilden. Zusätzlich ist zweckmäßigerweise der Abstand zwischen der Umfangsfläche des Antriebsrades und dem Teil der Trageinrichtung, welcher die beiden freien Schenkel miteinander verbindet, so beabstandet, daß ebenfalls in radialer Richtung eine Führung gegeben ist und ein Durchrutschen des Antriebsmittels oder ein Abspringen des Antriebsmittels von dem Antriebsrad in radialer Richtung verhindert werden kann.

Vorteilhafterweise sind die Antriebsräder und/oder die Trageinrichtungen aus Kunststoff gefertigt. Dies ermöglicht eine äußerst kostengünstige Fertigung, und bietet variable Gestaltungsmöglichkeiten zur Anpassung des Antriebssystemes an verschiedene Einsatzzwecke. Weiterhin kann eine gewisse Elastizität der Trageinrichtung sichergestellt werden, wodurch das Einrasten in dem Tragprofil vereinfacht wird.

Zweckmäßigerweise ist das Tragprofil an einer Längsseite, vorzugsweise an der den Förderrollen abgewandten Längsseite offen ausgebildet zum Einsetzen der Antriebseinrichtungen, wobei dieser offen ausgebildeter Bereich vorzugsweise durch eine Abdeckleiste verschließbar ist. Dies ermöglicht eine gute Zugänglichkeit zur Montage und Wartung des Antriebssystemes, da sämtliche Elemente des Antriebssystemes seitlich in das offene Tragprofil eingesetzt werden können. Dabei ist eine Demontage der Förderrollen nicht erforderlich, da vorteilhafterweise sämtliche Montage-, Wartungs- und Austauscharbeiten an den Antriebseinrichtungen von der den Förderrollen abgewandten Seite ausgeführt werden können. Nach dem Einsetzen wird der offen ausgebildete Bereich dann durch die vorzugsweise aus Kunststoff ausgebildete Abdeckleiste verschlossen, so daß das gesamte Antriebssystem vollständig in dem Tragprofil gekapselt ist, ohne daß zusätzliche Gehäuseteile erforderlich sind, um das Antriebssystem sicher einzuschließen. Auf diese Weise ist das Antriebssystem ferner sicher vor Verschmutzung oder Beschädigung beschützt und für Personen besteht keinerlei Gefahr, mit dem Antriebssystem in Kontakt zu kommen, wodurch die Verletzungsgefahr minimiert werden kann.

Nachfolgend wird die Erfindung anhand beiliegender Zeichnungen beispielhaft beschrieben. In den Zeichnungen zeigt:
- Fig. 1: eine Schnittansicht eines Tragprofils mit dem erfindungsgemäßen Antriebssystems.
- Fig. 2: eine Seitenansicht einer Antriebseinrichtung gemäß der Erfindung,
- Fig. 3: eine Seitenansicht sowie eine Draufsicht eines ersten Teiles einer Trageinrichtung,
- Fig. 4: eine Seitenansicht sowie eine Draufsicht eines zweiten Teiles einer Trageinrichtung und
- Fig. 5: eine Seitenansicht sowie eine Draufsicht der zusammengesetzten Trageinrichtung gemäß der Erfindung.

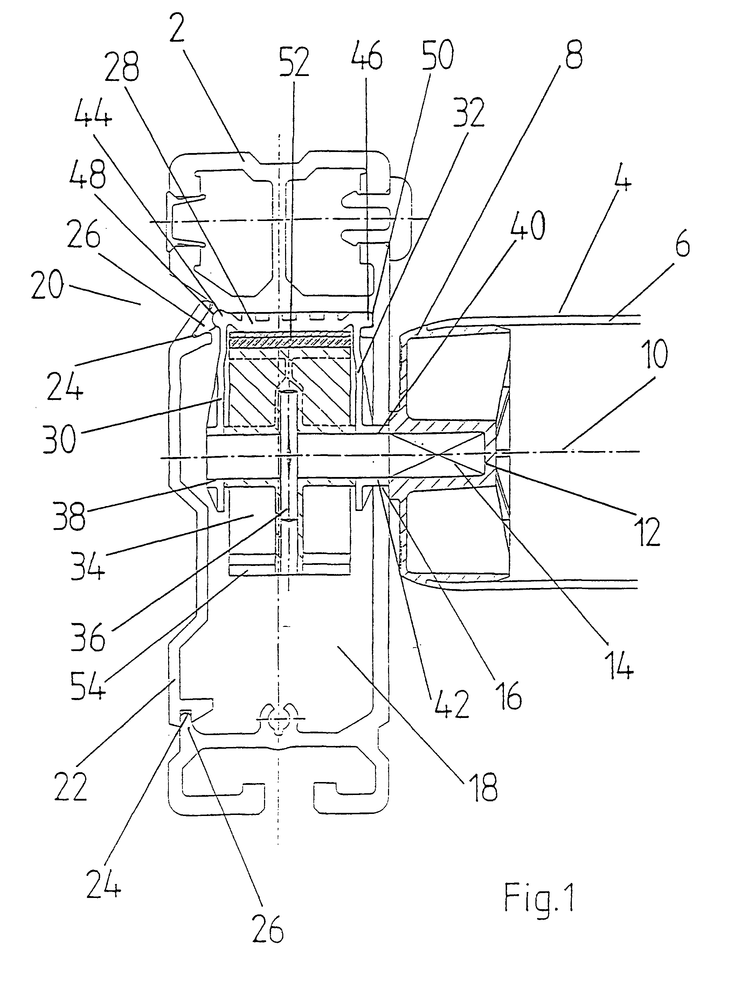

Figur 1 zeigt einen Schnitt durch ein Tragprofil 2 mit einer daran angebrachten Förderrolle 4, wobei nur das dem Tragprofil 2 zugewandte Ende der Förderrolle 4 dargestellt ist. Die Förderrolle 4 besteht aus einem zylindrischen Rollenkörper 6 sowie einem an dessen dem Tragprofil 2 zugewandten Stirnseite eingesetzten Rollenboden 8. Der Rollenkörper 6 besteht vorzugsweise aus Metall, während der Rollenboden 8 vorzugsweise aus Kunststoff, beispielsweise durch Spritzgießen gefertigt ist. Der Rollenboden 8 weist in Richtung der Rollenlängsachse 10 eine Aufnahme 12 auf, in die eine Antriebswelle 14 eingesteckt ist. Die Aufnahme 12 weist einen Querschnitt in Form eines Vierkantes auf, so daß die Antriebswelle 14, welche an ihrem der Förderrolle 4 zugewandten Ende ebenfalls als Vierkant ausgebildet ist, formschlüssig mit der Aufnahme 12 in Eingriff tritt, so daß eine sichere Kraftübertragung von der Antriebswelle 14 auf den Rollenboden 8 und damit auf die gesamte Förderrolle 4 gewährleistet ist.

Die Antriebswelle 14 erstreckt sich ausgehend von dem Rollenboden 8 in Richtung der Rollenlängsachse 10 durch eine Öffnung 16 in das Tragprofil 2 hinein. Das Tragprofil 2 ist ein Aluminiumstrangpreßprofil, welches in seinem Inneren einen Hohlraum 18 aufweist, der zu der der Förderrolle 4 abgewandten Längsseite 20 des Tragprofils 2 hin geöffnet ist. Die Öffnung des Hohlraumes 18 zur Längsseite 20 erstreckt sich in Längsrichtung des Tragprofiles 2 über dessen gesamte Länge. Die Öffnung des Hohlraums 18 ist durch eine Abdeckleiste 22 verschlossen. Die Abdeckleiste 22 ist vorzugsweise aus Kunststoff ausgebildet und weist Rastnuten 24 entlang ihrer oberen und unteren Kanten auf, welche sich über die gesamte Längsrichtung der Abdeckleiste erstrecken und mit korrespondierenden Rastvorsprüngen 26 an dem Tragprofil 2 in Eingriff treten. Die Rastvorsprünge 26 sind als durchgehende Stege ausgebildet, welche sich in Längsrichtung des Tragprofiles 2 erstrecken. Die Abdeckleiste 22 kann somit zur Montage der Antriebseinrichtung in dem Hohlraum 18 leicht demontiert und wieder angebracht werden, ohne daß spezielles Werkzeug erforderlich ist. In dem Hohlraum 18 ist für jede angetriebene Förderrolle 4 eine Trageinrichtung 28 angeordnet. Die Trageinrichtung 28 weist einen im wesentlichen U-förmigen Querschnitt mit zwei freien Schenkeln 30 und 32 auf, welche sich parallel zu den Stirnseiten eines Antriebsrades in Form eines Zahnrades 34 erstrecken. Das Zahnrad 34 ist auf die Antriebswelle 14 aufgesteckt, so daß sich diese vollständig durch das Zahnrad 34 hindurch erstreckt. Dabei ist das Zahnrad 34 auf der Antriebswelle 14 mit einem Kerbstift 36 befestigt, welcher sich im wesentlichen senkrecht zu der Rollenlängsachse 10 durch die Antriebswelle 14 hindurch erstreckt und somit das Zahnrad 34 auf der Antriebswelle 14 fixiert und eine sichere Kraftübertragung von dem Zahnrad 34 auf die Antriebswelle 14 ermöglicht. Die Trageinrichtung 28 weist in ihren beiden freien Schenkeln 30, 32 Öffnungen 38 und 40 auf, durch die sich die Antriebswelle 14 erstreckt, und welche als Gleitlager ausgebildet sind, in denen die Welle 14 gelagert ist. Die Trageinrichtung 28 ist vorzugsweise aus Kunststoff gefertigt, so daß auch die Gleitlager in den Öffnungen 38 und 40 als einfache Kunststoffschalen ausgebildet sind, in denen die Antriebswelle 14, welche vorzugsweise aus Metall gefertigt ist, gleitend gelagert ist. Um die Öffnung 40 in dem freien Schenkel 33 herum erstreckt sich im wesentlichen senkrecht zu dem freien Schenkel 32 von diesem ausgehend parallel zu der Rollenlängsachse 10 eine Hülse 42, welche in ihrem Inneren die Öffnung 40 aufweist und an ihrem äußeren Umfang als Sechskant ausgestaltet ist, der in die Öffnung 16 an der der Förderrolle 4 zugewandten Längsseite des Tragprofiles 2 eingreift. Dabei weist die Öffnung 16 eine korrespondierende sechseckige Form auf, so daß eine sichere Passung zwischen der Öffnung 16 und der Hülse 42 erreicht wird. Die Hülse 42 kann auch eine von der hier gezeigten sechseckigen Außenkontur abweichende Gestalt aufweisen, beispielsweise eine runde Außenkontur, wobei die Öffnung 16 entsprechend angepaßt ausgebildet wird.

Die Trageinrichtung 28 weist an ihren beiden Ecken bzw. Kanten, an denen die freien Schenkel 30, 32 mit der Basis der U-förmigen Trageinrichtung 28 verbunden sind zwei Rastvorsprünge 44, 46 auf, welche in zugehörige Rastnuten 48, 50 in dem Hohlraum 18 des Tragprofils 2 einrasten. Die Rastnuten 48, 50 erstrecken sich innerhalb des Hohlraums 18 entlang der beiden oberen Ecken von diesem durchgehend in Längsrichtung des Tragprofiles 2. Dies ermöglicht, daß an jeder beliebigen Stelle des Tragprofiles 2, an der eine angetriebene Förderrolle 4 benötigt wird, die Trageinrichtung 28 eingerastet werden kann. Es muß dann lediglich an der entsprechenden Stelle eine passende Öffnung 16 ausgebildet werden, damit die Hülse 42 der Trageinrichtung 28 mit dieser in Eingriff treten kann. Die Trageinrichtung 28 ist somit nur durch Einrasten mit dem Tragprofil 2 verbunden, wodurch eine sehr leichte, schnelle und kostengünstige Montage des Antriebssystemes erreicht wird. Die Trageinrichtung 28 ist so ausgebildet, daß zwischen der Umfangsfläche des Zahnrades 14 und der Basis der Trageinrichtung 28, welche die freien Schenkel 30 und 32 miteinander verbindet, ein Freiraum zur Führung eines Zahnriemens 52 verbleibt. Der Zahnriemen 52 tritt mit einer Verzahnung 54 am Umfang des Zahnrades 34 in Eingriff, um das Zahnrad 34 und damit über die Antriebswelle 14 die Förderrolle 4 anzutreiben. Dabei wird der Zahnriemen 52 zwischen den freien Schenkeln 30, 32 der Trageinrichtung 28 seitlich geführt. Da auch der radiale Abstand zwischen der Trageinrichtung 28 und der Umfangsfläche des Zahnrades 14 passend für den Zahnriemen 52 eingestellt ist, wird dieser ebenfalls in radialer Richtung auf dem Zahnrad 34 durch die Trageinrichtung 38 geführt, so daß er nicht abspringen oder durchrutschen kann.

Ferner weist das Tragprofil 2 an seiner äußeren Fläche noch mehrere Befestigungsnuten auf, wie sie bereits aus anderen Tragprofilen bekannt sind, mittels derer das Tragprofil 2 an einer Unterkonstruktion befestigt werden kann oder in denen Gleitschienen oder ähnliches befestigt werden können.

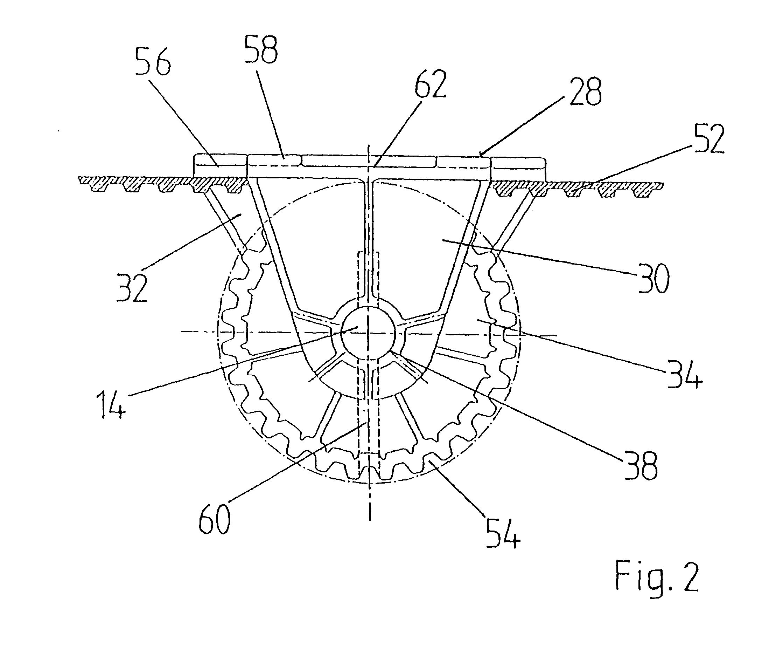

Figur 2 zeigt eine Seitenansicht der Trageinrichtung 28. Die Trageinrichtung 28 besteht aus zwei Teilen 56, 58, welche, wie später beschrieben wird, miteinander verbunden sind. Dabei trägt jedes Teil 56, 58 einen der freien Schenkel 30, 32. Zwischen den freien Schenkeln 30, 32 ist das Zahnrad 34 auf der Antriebswelle 14 angeordnet, welche in der Öffnung 38 in dem freien Schenkel 30 der Trageinrichtung 28 gelagert ist. In dem Zahnrad 34 ist ein Loch 60 (in Fig. 2 gestrichelt dargestellt) ausgebildet, welches sich durch den Mittelbereich des Zahnrades 34 senkrecht zu der Rollenlängsachse und der Antriebswelle 14 erstreckt, um den in Figur 1 gezeigten Kerbstift 36 zur Befestigung des Zahnrades 34 auf der Antriebswelle 14 aufzunehmen. An seiner Umfangsfläche weist das Zahnrad 34 die Verzahnung 54 auf, mit der der Zahnriemen 52 an der Oberseite des Zahnrades 34 in Eingriff tritt. Der Zahnriemen 52 wird dabei zwischen der Basis 62 der Trageinrichtung 28, welche die freien Schenkel 32 und 30 miteinander verbindet und der Umfangsfläche des Zahnrades 34 geführt. Auf diese Weise kann ein Abspringen oder Durchrutschen des Zahnriemens 52 von dem Zahnrad 34 verhindert werden. Die in Figur 2 gezeigte Anordnung mit der Trageinrichtung 28, dem Zahnrad 34 sowie der Antriebswelle 14 bildet das gesamte Antriebssystem für die Förderrolle, welches variabel in dem in Figur 1 gezeigten Tragprofil 2 an Positionen angeordnet werden kann, an denen angetriebene Förderrollen vorgesehen sind. Das Antriebssystem bietet somit eine äußerst kompakte und leicht zu montierende Einheit, welche geschützt im Inneren des Tragprofiles 2 angeordnet werden kann.

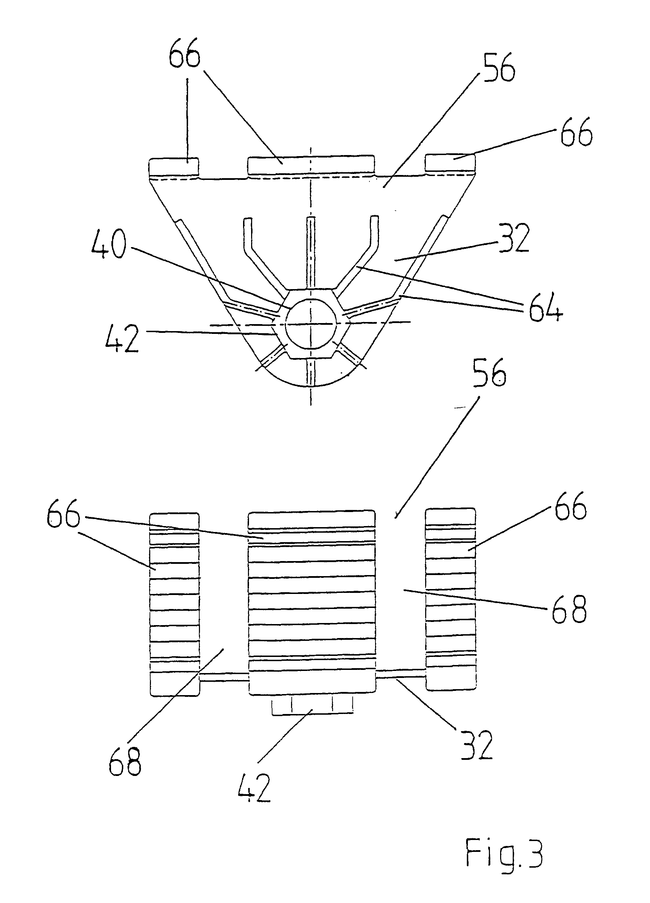

Anhand der Figuren 3 bis 5 wird nun der Aufbau der Trageinrichtung 28 näher beschrieben. Figur 3 zeigt eine Detailansicht des ersten Teiles 56 der Trageinrichtung 28. Dabei ist oben in Figur 3 eine Seitenansicht und unten in Figur 3 eine Draufsicht dargestellt. Das erste Teil 56 der Trageinrichtung 28 beinhaltet den freien Schenkel 32, an dessen Außenseite, d.h. der der Förderrolle 4 zugewandten Seite (siehe Figur 1), die Hülse 42 mit sechseckiger Außenkontur ausgebildet ist. Die Hülse 42 weist die Öffnung 40 auf, welche als Lager für die Antriebswelle 14 dient. Zusätzlich sind an der Außenseite des freien Schenkels 32 Verstärkungsrippen 64 ausgebildet, welche den Außenumfang der Hülse 42 schräg abfallend mit der äußeren Oberfläche des freien Schenkels 32 verbinden. Das erste Teil 56 weist drei sich im wesentlichen rechtwinklig von dem freien Schenkel 32 erstreckende Zungen 66 auf, welche durch zwei Freiräume 68 voneinander beabstandet sind. Die Zungen 66 erstrecken sich ausgehend von der oberen Kante des freien Schenkels 32 in einer Länge, die im wesentlichen dem Abstand zwischen den freien Schenkeln 30 und 32 im zusammengesetzten Zustand entspricht. Die Zungen 66 bilden dabei einen Teil der Basis 62 der Trageinrichtung 28.

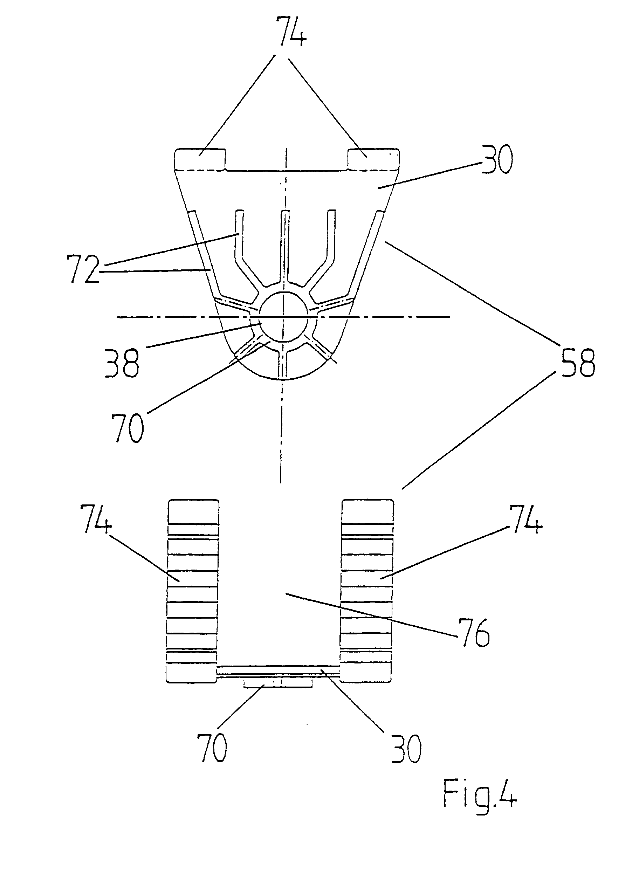

Figur 4 zeigt eine Detailansicht des zweiten Teiles 58 der Trageinrichtung 28. Dabei ist oben in Figur 4 eine Seitenansicht und unten in Figur 4 eine Draufsicht von oben des zweiten Teiles 58 dargestellt. Das zweite Teil 58 trägt den freien Schenkel 30, in dem die Öffnung 38 ausgebildet ist, welche als zweites Gleitlager für die Antriebswelle 14 dient. Um die Öffnung 38 herum erstreckt sich eine Hülse 70 rechtwinklig zu der Außenseite des freien Schenkels 30, d.h. zu der der Förderrolle 4 abgewandten Seite (siehe Fig. 1). Die Hülse 70 dient als Verstärkung des von der Öffnung 38 gebildeten Gleitlagers für die Antriebswelle 14. Ausgehend von der Hülse 70 erstrecken sich schräg abfallend zu der Oberfläche des freien Schenkels 30 Verstärkungsrippen 72. Das zweite Teil 58 umfaßt zwei Zungen 74, welche sich im wesentlichen senkrecht von dem freien Schenkel 30 erstrecken. Die Zungen 74 erstrecken sich ausgehend von der oberen Kante des freien Schenkels 30 in einer Länge, die im wesentlichen dem Abstand zwischen den beiden freien Schenkeln 30, 32 entspricht. Die beiden Zungen 74 erstrecken sich parallel zueinander und sind voneinander beabstandet, so daß zwischen den beiden Zungen 74 ein Freiraum 76 gebildet wird. Der Freiraum 76 weist eine Breite auf, welche der Breite der mittleren Zunge 66 in Figur 3 entspricht. Die Breite der Zungen 74 entspricht jeweils der Breite der Freiräume 68 in Figur 3.

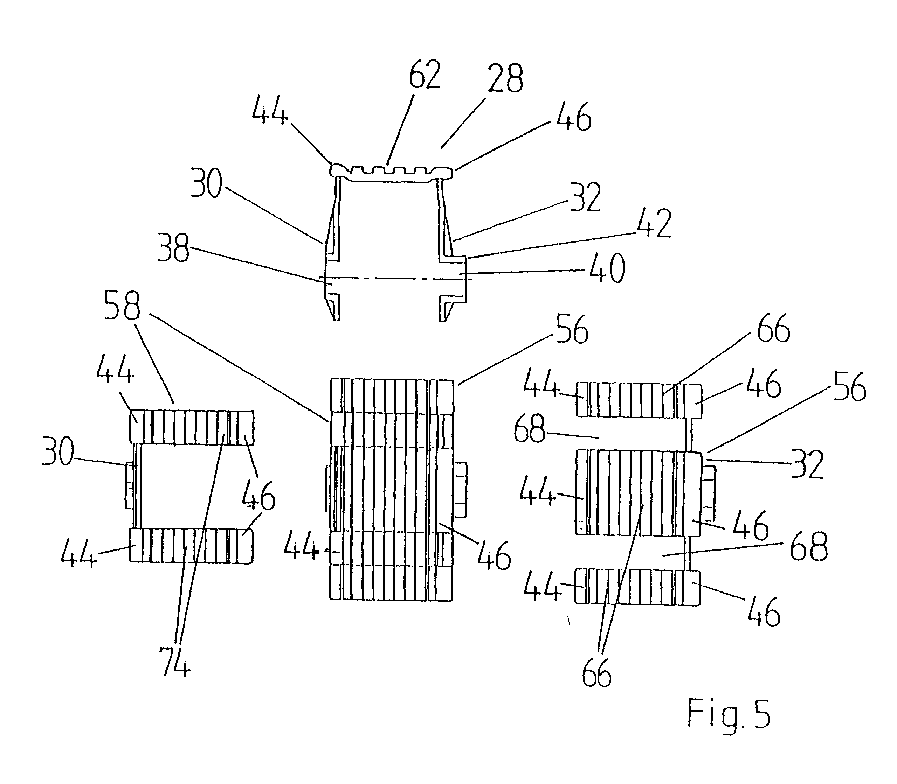

In Figur 5 ist dargestellt, wie die in Figuren 3 und 4 gezeigten ersten und zweiten Teile 56, 58 der Trageinrichtung 28 zusammengesetzt werden. Oben in Figur 5 ist die gesamte Trageinrichtung 28 im Schnitt gezeigt. Die beiden freien Schenkel 30, 32 sind über die Basis 62 miteinander verbunden, so daß die gesamte Trageinrichtung eine im wesentliche U-förmige Gestalt aufweist. An dem freien Schenkel 32 ist die Hülse 42 mit der darin ausgebildeten Öffnung 40, welche oben beschrieben wurden, vorgesehen. Der freie Schenkel 30 weist die oben beschriebene Öffnung 38 auf. Die beiden Ecken bzw. Kanten am Übergang von der Basis 62 zu den freien Schenkeln 30, 32 sind als Rastvorsprünge 44, 46 ausgebildet, wie anhand von Figur 1 beschrieben. Die gesamte Trageinrichtung 28 ist zweiteilig ausgebildet, sie setzt sich aus den ersten und zweiten Teilen 56, 58 zusammen, welche in Figur 5 rechts und links dargestellt sind und anhand von Figuren 3 und 4 näher beschrieben wurden. Die beiden Teile 56, 58 werden so ineinander geschoben, daß die Zungen 74 des Teils 58 in den Freiräumen 68 zwischen den Zungen 66 des Teiles 56 zu liegen kommen. Die vorderen Enden der Zungen 74, d.h. die von dem freien Schenkel 30 beabstandeten Enden sind entsprechend dem Rastvorsprung 46 ausgebildet. Ebenfalls sind die hinteren Enden der Zungen 66 des Teiles 56, d.h. die Enden, die dem Schenkel 32 zugewandt sind, entsprechend dem Rastvorsprung 46 ausgebildet. Somit wird von den Zungen 74 und den Zungen 66 im zusammengesetzten Zustand der Teile 56 und 58 gemeinsam der durchgehende Rastvorsprung 46 in Form einer durchgehenden Kante gebildet. Umgekehrt sind ebenfalls die freien Enden der Zungen 66, d.h. die dem freien Schenkel 32 abgewandten Seiten, entsprechend dem Rastvorsprung 44 ausgebildet, so daß sie gemeinsam mit den hinteren Enden der Zungen 74, d.h. die dem Schenkel 30 zugewandten Enden, die ebenfalls entsprechend dem Rastvorsprung 44 ausgebildet sind, im zusammengesetzten Zustand der Teile 56 und 58 einen durchgehenden Rastvorsprung 44 entlang der Kante der Basis 62 bilden.

Nachfolgend wird nun das Zusammensetzen der erfindungsgemäßen Antriebseinrichtung nochmals unter Bezugnahme zu Figur 1 beschrieben. Zunächst wird das Zahnrad 34 mit der Achse 14 verbunden und durch den Kerbstift 36 auf dieser gesichert. Dann wird das Zahnrad 34 mit der Achse 14 in die Öffnung 40 in dem Schenkel 32 des Teiles 56 (siehe Fig. 3) der Trageinrichtung 28 eingeschoben. Anschließend wird das Teil 56 in den Hohlraum 18 im Inneren des Tragprofiles 2 eingesetzt. Dabei wird die Hülse 42 in die Öffnung 16 eingepaßt und die Rastvorsprünge 44 und 46 an den Zungen 66 (siehe Fig. 3 und 5) rasten in den Rastnuten 48 und 50 im Tragprofil 2 ein. So werden das Antriebsrad und das Teil 56 der Trageinrichtung 28 sicher im Hohlraum 18 im Inneren des Tragprofiles 2 gehalten. Anschließend kann nun der Zahnriemen 52 durch die offene Längsseite 20 des Tragprofils 2 in den Hohlraum 18 eingebracht werden. Dabei wird der Zahnriemen 52 auf die Oberseite des Zahnrades 34 aufgeschoben, so daß er zwischen der Basis 62 (siehe Fig. 2 und 5) der Trageinrichtung 28 und der Verzahnung 54 des Zahnrades 34 zu liegen kommt, wobei er mit der Verzahnung 54 in Eingriff tritt. Anschließend wird nun das zweite Teil 58 der Trageinrichtung 28 mit dem Schenkel 30 auf das erste Teil 56 der Trageinrichtung 28 wie anhand von Figur 5 erläutert aufgeschoben. Dabei tritt das der Förderrolle 4 abgewandte Ende der Achse 14 in die Öffnung 38 in dem Schenkel 30 ein. Gleichzeitig rastet das zweite Teil 58 mit den an den Zungen 74 ausgebildeten Teilen der Rastvorsprünge 44 und 46 in den Rastnuten 48 und 50 des Tragprofiles 2 ein, so daß auch das zweite Teil 58 der Trageinrichtung 28 sicher im inneren des Tragprofiles 2 gehalten wird. Abweichend von dieser Ausführungsform, bei welcher das zweite Teil 58 der Trageinrichtung 28 auch in dem Tragprofil 2 einrastet, kann das zweite Teil 58 auch derart ausgestaltet werden, daß es nur mit dem ersten Teil 56 der Trageinrichtung 28 verrastet, welches mit dem Tragprofil 2 verrastet ist. Auf diese Weise wird eine noch einfachere Montage erreicht, da das zweite Teil 58 nur mit einem weiteren Bauteil direkt verbunden werden muß.

Anschließend kann die Abdeckleiste 22 an den Rastvorsprüngen 26 eingerastet werden, so daß der Hohlraum 18 in dem Tragprofil 2 nach außen vollständig verschlossen ist, so daß kein Schmutz in den Hohlraum 18 eindringen kann und keinerlei Verletzungsgefahr für Personen besteht, die in der Nähe der Rollenbahn hantieren. Anschließend wird nun das Tragprofil 2 an einer Rollenbahn gemeinsam mit einem gegenüberliegenden Tragprofil (hier nicht gezeigt) angebracht, um Förderrollen 4 aufzunehmen. Die Förderrolle 4 wird dann mit der Ausnehmung 12 in ihrem Rollenboden 8 auf das mit einem Vierkant versehene freie Ende der Antriebswelle 14 aufgesteckt und an ihrem anderen Ende an dem anderen nicht gezeigten Tragprofil in bekannter Weise drehbar gelagert angebracht. Es ergibt sich somit eine äußerst einfache Montage der erfindungsgemäßen Antriebseinrichtung in dem Tragprofil 2, welche keinerlei Schraubvorgänge oder sonstige aufwendige Montageoperationen erfordert. Zusätzlich ist die gesamte Antriebseinrichtung bestehend aus der Trageinrichtung 28, dem Zahnrad 34 und dem Zahnriemen 52 vollständig gekapselt im Inneren des Tragprofiles 2 eingeschlossen.

### Liste der Bezugsziffern:

- 2: Tragprofil
- 4: Förderrolle
- 6: Rollenkörper
- 8: Rollenboden
- 10: Rollenlängsachse
- 12: Ausnehmung
- 14: Antriebswelle
- 16: Öffnung
- 18: Hohlraum
- 20: Längsseite
- 22: Abdeckleiste
- 24: Rastnut
- 26: Rastvorsprung
- 28: Trageinrichtung
- 30, 32: freie Schenkel der Trageinrichtung
- 34: Zahnrad
- 36: Kerbstift
- 38: Öffnung
- 40: Öffnung
- 42: Hülse
- 44, 46: Rastvorsprünge
- 48, 50: Rastnuten
- 52: Zahnriemen
- 54: Verzahnung
- 56: erstes Teil der Trageinrichtung
- 58: zweites Teil der Trageinrichtung
- 60: Loch
- 62: Basis
- 64: Verstärkungsrippen
- 66: Zungen
- 68: Freiraum
- 70: Hülse
- 72: Verstärkungsrippen
- 74: Zungen
- 76: Freiraum

## Patentansprüche

1. Antriebssystem für Förderrollen (4) in einer Rollenbahn, bei welchem
zumindest einige der Förderrollen (4) durch Antriebseinrichtungen (14, 34, 52) drehend angetrieben werden und die Antriebseinrichtungen (14, 34, 52) vollständig im Inneren zumindest eines die Förderrollen (4) tragenden Tragprofils (2) angeordnet sind,
die Antriebseinrichtungen (14, 34, 52) zumindest ein Antriebsrad (34) für jede angetriebene Förderrolle (4) umfassen, welches über eine Welle (14) drehfest mit der Förderrolle (4) verbunden ist,
die Wellen (14) an beiden Seiten der zugehörigen Antriebsräder (34) in zumindest einer in dem Tragprofil (2) angeordneten Trageinrichtung (28) gelagert sind, welche
**dadurch gekennzeichnet ist,**
**daß** sie im wesentlichen U-förmig ausgebildet ist, wobei sich die beiden freien Schenkel (30, 32) der Trageinrichtung parallel entlang der Stirnseiten des zugehörigen Antriebsrades (34) erstrecken und die Lager (38, 40) für die Welle (14) aufweisen.

2. Antriebssystem nach Anspruch 1, bei welchem zumindest einen Gruppe von Antriebsrädern (34) über ein gemeinsames Antriebsmittel (52) angetrieben wird.

3. Antriebssystem nach Anspruch 2, bei welchem die Antriebsräder als Zahnräder (34) ausgebildet sind, welche über ein gemeinsames Antriebsmittel in Form eines Zahnriemens (52) oder einer Kette angetrieben werden.

4. Antriebssystem nach einem der Ansprüche 1 bis 3, bei welchem für eine vorbestimmte Anzahl von angetriebenen Förderrollen (4) oder für jede einzelne angetriebene Förderrolle (4) jeweils eine einzelnen Trageinrichtung (28) vorgesehen ist.

5. Antriebssystem nach einem der Ansprüche 1 bis 4, bei welchem die Trageinrichtung (28) im Inneren des Tragprofils (2) vorzugsweise durch Einrasten befestigt ist.

6. Antriebssystem nach einem der Ansprüche 1 bis 5, bei welchem die Trageinrichtung (28) derart teilbar ist, daß zumindest einer der freien Schenkel (30, 32) abnehmbar ist.

7. Antriebssystem nach Anspruch 6, bei welchem der abnehmbare Schenkel (30, 32) der Trageinrichtung (28) mit dem übrigen Teil der Trageinrichtung (28) und vorzugsweise auch mit dem Tragprofil (2) durch Einrasten verbindbar ist.

8. Antriebssystem nach einem der Ansprüche 2 bis 7, bei welcher die Trageinrichtung (28) eine Führung für das Antriebsmittel (52) bildet.

9. Antriebssystem nach einem der Ansprüche 1 bis 8, bei welchem die Antriebsräder (34) und/oder die Trageinrichtungen (28) aus Kunststoff gefertigt sind.

10. Antriebssystem nach einem der vorangehenden Ansprüche, bei welchem das Tragprofil (2) an einer Längsseite, vorzugsweise an der den Förderrollen (4) abgewandten Längsseite (20) offen ausgebildet ist zum Einsetzen der Antriebseinrichtungen (14, 34, 52), wobei dieser offen ausgebildete Bereich vorzugsweise durch eine Abdeckleiste (22) verschließbar ist.

## Claims

1. A drive system for conveying rollers (4) in a roller conveyor, in which at
least some of the conveying rollers (4) are driven in rotation by drive arrangements (14, 34, 52) and the drive arrangements (14, 34, 52) are arranged completely within at least one supporting section (2) supporting the conveying rollers (4),
in which the drive arrangements (14, 34, 52) comprise at least one driving wheel (34) for each driven conveying roller (4), which is connected to the conveying roller (4) via a shaft (14) in a rotation-proof manner,
in which the shafts (14) are mounted on both sides of the associated driving wheels (34) in at least one supporting device (28) arranged in the supporting section (2), which
is **characterized in that**
it is substantially U-shaped, with the two free legs (30, 32) of the supporting device extending parallel along the front sides of the associated driving wheel (34) and comprising the bearings (38, 40) for the shaft (14).

2. The drive system as claimed in claim 1, in which at least one group of driving wheels (34) being driven by a common driving means (52).

3. The drive system as claimed in claim 2, in which the driving wheels are designed as gearwheels (34), which are driven by means of a common driving means in the form of a toothed belt (52) or a chain.

4. The drive system as claimed in any of claims 1 to 3, in which one individual supporting device (28) is provided for a predetermined number of driven conveying rollers (4) or for each individual driven conveying roller (4).

5. The drive system as claimed in any of claims 1 to 4, in which the supporting device (28) is secured within the supporting section (2), preferably by being latched in.

6. The drive system as claimed in any of claims 1 to 5, in which the supporting device (28) can be divided in such a way that at least one of the free legs (30, 32) is removable.

7. The drive system as claimed in claim 6, in which the removable leg (30, 32) of the supporting device (28) can be connected to the remaining part of the supporting device (28) and preferably also to the supporting section (2) by being latched in.

8. The drive system as claimed in any of claims 2 to 7, in which the supporting device (28) forms a guide for the driving means (52).

9. The drive system as claimed in any of claims 1 to 8, in which the driving wheels (34) and/or the supporting devices (28) are manufactured from plastic.

10. The drive system as claimed in any of the preceding claims, in which the supporting section (2) is of open construction on one longitudinal side, preferably on the longitudinal side (20) facing away from the conveying rollers (4), to enable the drive arrangements (14, 34, 52) to be inserted, this area of open construction preferably being closable by means of a cover strip (22).

## Revendications

1. Dispositif d'entraînement de rouleaux de transport (4) dans un transporteur à rouleaux, dans lequel
au moins certains des rouleaux de transport (4) sont entraînés en rotation par des mécanismes d'entraînement (14, 34, 52) et les mécanismes d'entraînement (14, 34, 52) sont disposés entièrement à l'intérieur d'au moins un profilé de support (2) portant les rouleaux de transport (4),
les mécanismes d'entraînement (14, 34, 52) comprennent, pour chaque rouleau de transport (4) entraîné, au moins une roue d'entraînement (34) respective qui est reliée par l'intermédiaire d'un axe (14) au rouleau de transport (4) de façon à en être solidaire en rotation,
les axes (14) sont montés à palier, sur les deux côtés des roues d'entraînement (34) associées, dans au moins un dispositif de support (28) qui est disposé dans le profilé de support (2) et qui est
**caractérisé**
**en ce qu'**il est réalisé essentiellement en forme de U, tandis que les deux branches (30, 32) libres du dispositif de support s'étendent parallèlement le long des faces frontales de la roue d'entraînement (34) associée et comprennent les paliers (38, 40) prévus pour l'axe (14).

2. Dispositif d'entraînement suivant la revendication 1, dans lequel au moins un groupe de roues d'entraînement (34) est entraîné par un moyen d'entraînement (52) commun.

3. Dispositif d'entraînement suivant la revendication 2, dans lequel les roues d'entraînement sont réalisées sous forme de roues dentées (34) qui sont entraînées par un moyen d'entraînement commun se présentant sous forme d'une courroie crantée (52) ou d'une chaîne.

4. Dispositif d'entraînement suivant l'une des revendications 1 à 3, dans lequel, pour un nombre préfixé de rouleaux de transport (4) entraînés ou pour chaque rouleau de transport (4) entraîné individuel, il est chaque fois prévu un dispositif de support (28) individuel respectif.

5. Dispositif d'entraînement suivant l'une des revendications 1 à 4, dans lequel le dispositif de support (28) est fixé à l'intérieur du profilé de support (2), de préférence par enclenchement.

6. Dispositif d'entraînement suivant l'une des revendications 1 à 5, dans lequel le dispositif de support (28) est séparable en plusieurs parties, d'une manière telle qu'au moins l'une des branches (30, 32) libres peut être retirée.

7. Dispositif d'entraînement suivant la revendication 6, dans lequel la branche (30, 32) pouvant être retirée du dispositif de support (28) peut être reliée à la partie restante du dispositif de support (28), et de préférence également au profilé de support (2), par enclenchement.

8. Dispositif d'entraînement suivant l'une des revendications 2 à 7, dans lequel le dispositif de support (28) constitue un guide pour le moyen d'entraînement (52).

9. Dispositif d'entraînement suivant l'une des revendications 1 à 8, dans lequel les roues d'entraînement (34) et/ou les dispositifs de support (28) sont réalisés en matière plastique.

10. Dispositif d'entraînement suivant l'une des revendications précédentes, dans lequel le profilé de support (2) est réalisé ouvert sur un côté longitudinal, de préférence sur le côté longitudinal (20) situé à l'opposé des rouleaux de transport (4), en vue de la mise en place des dispositifs d'entraînement (14, 34, 52), cette zone réalisée d'une manière ouverte pouvant de préférence être obturée par une baguette de recouvrement (22).
